(19) Europäisches Patentamt
European Patent Office
Office européen des brevets

(11) Publication number: **0 169 026**
**B1**

(12) # EUROPEAN PATENT SPECIFICATION

(45) Date of publication of patent specification: **25.01.89**

(51) Int. Cl.$^4$: **B 01 J 29/06,** B 01 J 37/06

(21) Application number: **85304932.8**

(22) Date of filing: **10.07.85**

(54) **Activation of zeolites.**

(30) Priority: **16.07.84 US 631430**

(43) Date of publication of application:
**22.01.86 Bulletin 86/04**

(45) Publication of the grant of the patent:
**25.01.89 Bulletin 89/04**

(84) Designated Contracting States:
**BE DE FR GB IT NL SE**

(56) References cited:
**EP-A-0 024 930**
**EP-A-0 096 120**
**EP-A-0 134 332**
**FR-A-2 374 283**

(73) Proprietor: **MOBIL OIL CORPORATION**
**150 East 42nd Street**
**New York New York 10017 (US)**

(72) Inventor: **Chu, Pochen**
**1173 Ollerton Road**
**West Deptford, NJ 08066 (US)**

(74) Representative: **Cooper, John Anthony et al**
**Mobil Court 3 Clements Inn**
**London WC2A 2EB (GB)**

EP 0 169 026 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to activation of zeolites.

Zeolite catalysts have become widely used in the processing of petroleum and in the production of various petrochemicals. Reactions such as cracking, hydrocracking, catalytic dewaxing, alkylation, dealkylation, transalkylation, isomerization, polymerization, addition, disproportionation and other acid catalyzed reactions may be performed with the aid of these catalysts. Both natural and synthetic zeolites are known to be active for these reactions.

The common crystalline zeolite catalysts employ aluminosilicates, such as zeolites A, X, Y and mordenite. Structurally, each such material can be described as a robust three dimensional framework of $SiO_4$ and $A1O_4$ tetrahedra that are crosslinked by the sharing of oxygen atoms whereby the ratio of total aluminum and silicon atoms to oxygen is 1:2. These structures (as well as other crystalline zeolites of catalytic usefulness) are porous, and permit access of reactant molecules to the interior of the crystal through windows formed of eight-membered rings (small pore), ten-membered rings (intermediate pore), or twelve-membered rings (large pore). The electrovalence of the aluminum that is tetahedrally contained in the robust framework is balanced by the inclusion of cations in the channels (pores) of the crystal.

An "oxide" empirical formula that has been used to describe the above class of crystalline zeolites is

$$M_{2/n}O.Al_2O_3.xSiO_2.yH_2O$$

wherein M is a cation with valence n. For many naturally occurring and synthetic zeolites, x has a value of from 2 to 10, but recently zeolites have been synthesized with x, commonly referred to as the "silica to alumina ratio", exceeding 10. Such high silica to alumina ratio zeolites have been found to exhibit many advantageous properties, including a high degree of structural stability and have been used or proposed for various processes, especially catalytic processes. For example, high silica to alumina ratio zeolites in which M is a gallium cation and their use in hydrocarbon conversion processes are disclosed in EP—A—24930.

In some instances, it has been found that incorporating an oxide of boron in the forming solution of a high silica content zeolite results in a zeolite that has a content of boron which is not readily removed by simple ion exchange or other non-aggressive means, i.e. the zeolite contains framework boron.

It has now been found that the acidic catalytic activity of a high silica content crystalline zeolite of large pore size, provided it contains at least 0.1 wt% framework boron, can be increased if the zeolite is treated with an aqueous solution, preferably mildly acidic, of the salt of a metal selected from aluminum, gallium, and iron. The activation proceeds under unusually mild conditions, such as by contacting the zeolite with the salt solution for 2 hours at 100°C.

While the mechanism is not fully understood, it is believed that the activation occurs because the framework boron content of the zeolite is reduced by the contacting procedure while the trivalent metal content of the crystals is increased, resulting effectively in an exchange of metal for at least a portion of the boron originally present in the robust framework. The added metal contributes acid activity to the treated crystals, while little or no diminution of acid activity results from loss of boron.

The expression "high silica content" as used herein means a silica to amunina molar ratio greater than 10, preferably greater than 30 to 1 and most oreferably greater than 100 to 1 up to and including those crystalline zeolites for which the silica to alumina ratio approaches infinity. Such alumina free material may sometimes be prepared from reaction solutions which contain no deliberate addition of aluminum. However, trace quantities of aluminum are usually present due to the impurity of the reaction solutions. The silica to alumina ratio may be determined by conventional analysis. The ratio represents, as closely as possible, the ratio in the robust framework of the zeolite crystal, and is intended to exclude materials such as aluminum in the binder or in another form within the channels of the zeolite. The ratio also may be determined by the thermogravimetric analysis (TGA) of desorption of ammonia from the ammonium form of the zeolite. This method is described in Thermochimica Acta, *3,* pages 113—124, 1971. The term "large pore size" as used herein means a pore size defined by apertures or "windows" of 12-membered rings of oxygen atoms, such as are found in Zeolite X. Such large pore zeolites have a Constraint Index, as defined in, for example, U.S. Patent 4,016,218 of less than or equal to 2.

The preferred zeolites for treatment by the present method, in addition to having the requisite boron content and the requisite silica to alumina ratio, have crystal structures corresponding to Zeolite Beta (Constraint Index 1.2), to ZSM—12 (Constraint Index 2), and mordenite (Constraint Index 0.4). Zeolite Beta is particularly preferred.

The principal lines and their relative intensities (R.I.) for Zeolite Beta, ZSM—12 and mordenite are given below in Tables I, II and III, respectively.

Table I. Zeolite Beta

| d-Spacing (A.U.) | R.I. |
|---|---|
| 11.5 ± 0.3 | M-S |
| 7.4 ± 0.2 | W |
| 6.6 ± 0.15 | W |
| 4.15 ± 0.10 | W |
| 3.97 ± 0.10 | VS |
| 3.00 ± 0.07 | W |
| 2.05 ± 0.05 | W |

Table II ZSM-12

| d-Spacing (A.U.) | R.I. |
|---|---|
| 11.9 ± 0.2 | M |
| 10.1 ± 0.2 | M |
| 4.76 ± 0.10 | W |
| 4.29 ± 0.08 | VS |
| 3.98 ± 0.08 | M |
| 3.87 ± 0.07 | VS |
| 3.49 ± 0.07 | W |
| 3.38 ± 0.07 | M |
| 3.20 ± 0.06 | W |
| 3.05 ± 0.05 | W |
| 2.54 ± 0.03 | W |

Table III. Mordenite

| d-Spacing (A.U.) |
|---|
| 13.70 ± 0.3 |
| 9.10 ± 0.2 |
| 6.61 ± 0.15 |
| 5.79 ± 0.10 |
| 4.53 ± 0.10 |
| 4.00 ± 0.10 |
| 3.84 ± 0.08 |
| 3.48 ± 0.08 |
| 3.39 ± 0.07 |
| 3.22 ± 0.07 |
| 2.90 + 0.05 |

Methods for preparing high silica content zeolites that contain framework boron are disclosed in, for example, U.S. Patent 4,269,813. The amount of boron contained in the zeolite usually may be varied by incorporating different amounts of borate ion in a zeolite forming solution.

For purpose of the present method, the as-synthesized crystalline zeolite is calcined in air at elevated temperature to remove organic matter if such is present. It is then converted by ion exchange to the ammonium form, after which it may be calcined to convert the ammonium form to the hydrogen form. Either the hydrogen or the ammonium form may be used, since the present method appears to be effective with both.

In accordance with the present method, the high silica content large pore zeolite that contains at least 0.1 wt% framework boron, is activated by contact with a solution of the salt of a metal selected from aluminum, gallium, iron and mixtures thereof. Useful salts include those of common mineral acids such as nitrates, chlorides and sulfates, although it is contemplated that other soluble salts such as fluorides and acetates may be equally effective. The salt primarily functions as a source of trivalent metal cation, which is believed to be the species which is responsible for the activation. The preferred salts are the trivalent metal salts of the mineral acids, since these hydrolyze in aqueous solution to provide a mildly acidic aqueous medium in which the salt is maintained in solution and in which the activation proceeds very readily.

Although the described salts of the mineral acids are preferred because they permit the present method to be practiced in one step, it is possible to employ any soluble salt of aluminum, gallium or iron which in solution has a pH greater than about 6, provided that the zeolite is treated first with water or any aqueous solution of pH less than 6 under conditions effective to hydrolyze at least a portion of said framework boron, followed by contact with said salt solution. Preferably, the hydrogen form of the zeolite is first treated with liquid water at a temperature of 25°C to 125°C for 0.1 hours to 80 hours to induce hydrolysis with simultaneous removal of boron from the crystals. The ammonium form also may be treated, and even the sodium form, to effect hydrolysis, keeping in mind that these will hydrolyse more slowly than the hydrogen form. However, the hydrolysis of these forms will benefit from use of water which is made mildly acidic, thereby converting in situ the ammonium or the sodium form to the hydrogen form. Saturated steam also may be used to induce or to speed hydrolysis, with or without subsequent washing to remove boron. In general, the contemplated conditions for the hydrolysis are:

| | Temperature | Time |
|---|---|---|
| broad | 15° C - 200° C | 0.05 - 100 hrs. |
| preferred | 25° C - 125° C | 0.1 - 80 hrs. |
| most preferred | 50° C - 100° C | 0.2 - 20 hrs. |

Conditions for the contacting with the metal salt solution are not believed to be critical. As will be seen from the examples which follow, activation takes place when the crystals are treated for 2 hours with 0.1 Normal solutions of ferric or aluminum nitrate, or with 50% solution of $Al_2(OH)_5$ Cl solution, all at 100°C. Broadly, it is contemplated to contact the crystals from 0.05 hours to 10 hours with an aqueous solution of the salt at a temperature of 20°C to 150°C.

In general, following the contacting step, the zeolite is separated from the solution, washed with water, and calcined at 538°C (1000°F) in air.

The term "acid catalytic activity" as used herein refers to the effectiveness of a zeolite, when in suitable form, for catalyzing reactions known to be promoted by so-called acid catalysts. Catalytic cracking, hydrocracking, skeletal isomerization, dewaxing, and various aromatic hydrocarbon reactions such as alkylation, dealkylation, isomerization and disproportionation, are hydrocarbon conversion reactions which fall in the category of acid catalyzed reactions. Other reactions, such as alcohol dehydration, are also in this class.

As is known in the art, the acid catalytic activity of a zeolite may be measured by its "alpha value", which is the ratio of the rate constant of a test sample for cracking normal hexane to the rate constant of a standard reference catalyst. Thus, an alpha value = 1 means that the test sample and the reference standard have about the same activity. The alpha test is described in U.S. Patent 3,354,078 and in The Journal of Catalysis, Vol. IV, pp. 522—529 (August 1965). Measurement of the "alpha value" is useful to assess the degree of activation achieved with any sample treated by the present method.

It is to be noted that the present method is readily adapted to achieve a controlled activation, i.e. a predetermined activity. This may be done in one or more ways. By limiting the boron content of the material to be treated, the degree of activation is thereby limited. Or, by limiting the amount of salt in contact with the zeolite, or the treating time, or by use of lower temperature, a predetermined activation can be achieved. Or, the zeolite may be steamed at elevated temperature at any stage of its treatment to reduce its activity to a predetermined level. Since treatment with an iron salt does not increase as markedly as with an aluminum salt, this option, too, provides a means for controlling the ultimate activity of the zeolite by treating sequentially with iron and then with aluminum, or with a mixture of the two metal salts.

As in the case with many catalysts, it may be described to incorporate the zeolite product with another

material resistant to the temperatures and other conditions employed in organic conversion processes. Such material include clays, silica and/or metal oxides, with alumina being particularly preferred.

In addition to the foregoing materials, the zeolite can be composited with a porous matrix material such as silica-alumina, silica-magnesia, silica-zirconia, silica-thoria, silica-beryllia, silica-titania, as well as ternary compositions such as silica-alumina-thoria, silica-alumina-zirconia, silica-alumina-magnesia and silica-magnesia-zirconia. The relative proportions of finely divided crystalline zeolite and inorganic oxide matrix vary widely with the zeolite content ranging from 1 to 90 percent by weight and more usually in the range of 20 to 80 percent by weight of the composite.

The invention will now be illustated by examples in which all parts and proportions are by weight unless explicitly stated to be otherwise.

Example 1

A boron-containing Zeolite Beta was prepared from a forming solution that included boric acid. This material was calcined in air and converted to the ammonium form by exchanging the calcined base with $NH_4NO_3$ solutions at an adjusted solution pH of 9 to 10 range. The water-washed and dried $NH_4$ form was found to have the X-ray diffraction pattern of Zeolite Beta and the following elemental analysis.

| | |
|---|---|
| $SiO_2$ | 79.2% Weight |
| $Al_2O_3$ | 0.72% Weight |
| $B_2O_3$ | 3.28% Weight |
| Na | 0.02% Weight |
| N | 1.14% Weight |
| Ash | 82.4% Weight |

Example 2

A portion of the ammonium form zeolite of Example 1 was treated with 50% weight $Al_2(OH)_5Cl$ solution (20 ml/g of zeolite) at 100°C for 2 hours. The solid was filtered, water-washed and calcined at 538°C (1000°F) in air for 3 hours. The activity of the sample measured by alpha test was 462 compared to 28 of that of the untreated form.

Example 3

Another portion of the ammonium product of Example 1 was treated as described in Example 2 except 0.1 N $Al(NO_3)_3$ solution was used instead of $Al_2(OH)_5Cl$ solution. The alpha test result of the calcined product was 541.

Example 4

Another preparation was made as described in Example 2 except that 0.1 N $Fe(NO_3)_3$ solution was used instead of $Al_2(OH)_5Cl$ solution. The alpha test result was 53.

Example 5

Another preparation was made as described in Example 2 except that the hydrogen form zeolite obtained by calcining a sample of the ammonium form zeolite of Example 1 was used instead of the $NH_4$ form. The alpha test result was 534.

Example 6

Another preparation was made as described in Example 3 except acid form zeolite was used instead of $NH_4$ form. The alpha test result was 47.

Example 7

Part of the preparations made in the above five examples and a sample of the hydrogen form zeolite obtained by calcining the ammonium form zeolite of Example 1, were steamed at 538°C (1000°F) for 6 hours with 100% steam. The alpha test results of the steamed samples are 81, 62, 57, 62, 62 and 10 respectively. All the results together with some analytical data are summarized in Table IV for comparison.

Table IV

Activation of Zeolite Beta Containing Boron

| Example | 2 | 3 | 4 | 5 | 6 | 1 |
|---|---|---|---|---|---|---|
| Treating Agent | $Al_2(OH)_5Cl$ | $Al(NO_3)_3$ | $Fe(NO_3)_3$ | $Al(NO_3)_3$ | $Fe(NO_3)_3$ | None |
| Base Zeolite | -----$NH_4$+ Form, Example 1------- | | | -----H+ Form, Example 1----- | | |
| Calcination | -----------------538°C(1000° F), 3 Hrs in Air ----------------- | | | | | |
| Boron, % wt | 0.03 | 0.01 | 0.06 | 0.01 | 0.03 | 0.90 |
| Iron, % wt | -- | -- | 2.3 | -- | 1.6 | -- |
| $Al_2O_3$, % wt | -- | 4.6 | -- | 4.1 | -- | 0.78 |
| Value (Fresh) | 462 | 541 | 53 | 534 | 47 | 28 |
| Value | 81 | 62 | 57 | 62 | 62 | 10 |
| (Steamed at 538°C [1000°F] 6 Hours, 100% Steam) | | | | | | |

Example 8

Sodium hydroxide, 4.8 g, and 1 g of boric acid were dissolved in 140 g of water. A 50% methyltriethylammonium chloride solution, 35.5 g was added. Finally, a mixture of 38.2 g of silica sol (30% $SiO_2$, Ludox LS) and 40 g of water was added with stirring. The reaction mixture was aged for 24 hours at 50°C and then heated at 160°C for 91 hours. A well crystallized material of ZSM—12 structure was obtained. Sorption capacities (g/100 g) and chemical composition were found to be:

| | |
|---|---|
| Cyclohexane, 20 Torr | 6.6 |
| n-Hexane, 20 Torr | 6.2 |
| Water, 12 Torr | 7.5 |
| Chemical Composition | wt% |
| $SiO_2$ | 85.9 |
| $Al_2O_3$ | 0.12 |
| $B_2O_3$ | 1.71 |
| $Na_2O$ | 0.25 |
| N | 1.18 |
| Ash | 91.0 |
| $SiO_2/(Al_2O_3 + B_2O_3)$ | 55.5 |
| B/(Al + B) | 0.95 |

Example 9

A portion of the product of Example 8 was calcined to remove the organic template, and then converted to the ammonium form by base exchange.

In turn, a portion of the ammonium form was treated as described in Example 3, the remainder being retained for activity test.

The alpha test result of the treated ammonium sample was very much higher than for the sample before treatment.

## Claims

1. A method for increasing the catalytic activity of a composition comprising a zeolite having a silica to alumina molar ratio greater than 10 and a constraint index less than or equal to 2, which zeolite contains from 0.1 to 2.5 weight % of framework boron, the method comprising the steps of:

(a) contacting said composition with water under conditions effective to remove boron from the zeolite, and

(b) contacting said composition with an aqueous solution of a salt of a metal selected from aluminum, gallium, iron and mixtures thereof.

2. The method as claimed in Claim 1 wherein said zeolite is converted to the ammonium or hydrogen form before said contacting steps.

3. The method as claimed in Claim 1 or Claim 2 step (a) is conducted at a pH less than 6.

4. The method as claimed in any preceding claim wherein step (a) is effected at 25—125°C for 0.1—80 hours.

5. The method as claimed in any preceding claim wherein step (b) is effected at 20—150°C for 0.05—10 hours.

6. The method as claimed in any of claims 1 to 3 wherein steps (a) and (b) are effected simultaneously.

7. The method as claimed in any preceding claim wherein the zeolite is zeolite beta, mordenite or ZSM—12.

8. The method as claimed in any preceding claim wherein the zeolite is zeolite beta.

## Patentansprüche

1. Verfahren zur Steigerung der katalytischen Aktivität einer Zusammensetzung, die einen Zeolith mit einem Siliciumdioxid/Aluminiumoxid-Molverhältnis von größer als 10 und einen Zwangsindex von kleiner als oder gleich 2 umfaßt, wobei der Zeolith von 0,1 his 2,5 Gew.-% Gitter-Bor enthält, wobei dieses Verfahren die Schritte umfaßt:

(a) Kontakt dieser Zusammensetzung mit Wassers bei Bedingungen, die zur Entfernung des Bors aus dem Zeolith wirksam sind und

(b) Kontakt dieser Zusammensetzung mit einer wässrigen Lösung eines Salzes von einem Metall, das

aus Aluminium, Gallium, Eisen und Mischungen davon ausgwählt ist.

2. Verfahren nach Anspruch 1, worin der Zeolith vor den Kontaktschritten in die Ammonium- oder Wasserstofform umgewandelt wird.

3. Verfahren nach Anspruch 1 oder Anspruch 2, worin der Schritt (a) bei einem pH-Wert von kleiner als 6 durchgeführt wird.

4. Verfahren nach einem der vorstehenden Ansprüche, worin der Schritt (a) 0,1 bis 80 Stunden lang bei 25 bis 125°C durchgeführt wird.

5. Verfahren nach einem der vorstehenden Ansprüche, worin der Schritt (b) 0,05 bis 10 Stunden lang bei 20 bis 150°C durchgeführt wird.

6. Verfahren nach einem der Ansprüche 1 bis 3, worin die Schritt (a) und (b) gleichzeitig durchgefürt werden.

7. Verfahren nach einem der vorstehenden Ansprüche, worin der Zeolith Zeolith Beta, Mordenit oder ZSM—12 ist.

8. Verfahren nach einem der vorstehenden Ansprüche, worin der Zeolith Zeolith Beta ist.

**Revendications**

1. Procédé d'augmentation de l'activité catalytique d'une composition comprenant une zéolite présentant un rapport molaire silice/alumine supérieur à 10 et un indice de contrainte inférieur à ou égal à 2, ladite zéolite contenant de 0,1 à 2,5% en poids de bore dans sa structure, la méthode comprenant les étapes de:

(a) contact de ladite composition avec de l'eau dans des conditions efficaces pour éliminer le bore contenu dans la zéolite; et

(b) contact de ladite composition avec une solution aqueuse d'un sel d'un métal consistant en aluminium, gallium, fer en leurs mélanges.

2. Le procédé ainsi que revendiqué dans la revendication 1, dans lequel ladite zéolite est convertie en la forme ammoniée ou protinée avant lesdites étapes de contact.

3. Le procédé ainsi que revendiqué dans la revendication 1 et 2, dans lequel l'étape (a) est effectuée à un pH inférieur à 6.

4. Le procédé ainsi que revendiqué dans l'une quelconque des revendications précédentes, dans lequel l'étape (a) est effectuée à 25 à 125°C durant 0,1 à 80 heures.

5. Le procédé ainsi que revendiqué dans l'une quelconque des revendications précédentes, dans lequel l'étape (b) est effectuée à 20 à 150°C durant 0,05 à 0 heure.

6. Le procédé ainsi que revendiqué dans l'une quelconque des revendications 1 à 3, dans lequel les étapes (a) et (b) dont effectuées simultanément.

7. Le procédé ainsi que revendiqué dans l'une quelconque des revendications précédentes, dans lequel la zéolite consiste en zéolite béta, mordénite ou ZSM—12.

8. Le procédé ainsi que revendiqué dans l'une quelconque des revendications précédentes, dans lequel la zéolite est la zéolite béta.